# EUROPEAN PATENT APPLICATION

(11) **EP 3 441 815 A1**
(43) Date of publication of application: **13.02.2019**
(21) Application number: 17779250.4
(22) Date of filing: 07.04.2017
(51) Int. Cl.: G02C 7/10, G02B 5/20, G02B 5/22, G02B 5/26, G02C 1/06

(54) **WEIGHT LOSS GLASSES**

(30) Priority: 07.04.2016 JP 2016077696
(71) Applicant: Tsubota Laboratory, Inc., Tokyo 107-0062 (JP)
(72) Inventor: TSUBOTA, Kazuo, Tokyo 107-0062 (JP); AYAKI, Masahiko, Tokyo 158-0082 (JP)
(74) Representative: Mewburn Ellis LLP
(86) International application number: PCT/JP2017/014596
(87) International publication number: WO 2017/175873

(57) **Abstract**

To provide a translucent member that has the effect of lowering triglycerides, increasing IRS-2, and the like. The above-described problem is solved by a translucent member (1) that blocks or suppresses transmission of at least light that is received by an eye and has a wavelength of 460 nm. The translucent member (1) may be an eyeglass lens or eyeglasses as a whole. The eyeglasses (1) preferably comprise a lens (2) that blocks or suppresses transmission of at least light having a wavelength of 460 nm, and a rim (3) that blocks or suppresses transmission of at least light having a wavelength of 460 nm. The rim (3) preferably comprise a projecting portion (3a) for decreasing a gap between the rim (3) and a face of an eyeglass wearer or eliminating the gap by coming into contact with the face.

## Description

### Field of the Invention

The present invention relates to weight loss eyeglasses. More specifically, the present invention relates to a translucent member such as eyeglasses, a translucent sheet, or a translucent plate that produces an effect of lowering triglycerides, lowering blood glucose, increasing IRS-2, and the like related to metabolism.

### BACKGROUND ART

To lower triglycerides, it is desirable to avoid food with high fat content, consume food that lowers triglycerides to the extent possible, consume supplements that lower triglycerides, refrain from alcohol consumption which produces and converts triglycerides into fatty acids to be burned, exercise, and the like. Such actions are largely divided into behavior realized by consumption and behavior realized by exercise and the like.

A search was conducted for prior art documents related to a translucent member having the effect of lowering triglycerides and the like related to metabolism, but no such document existed. Further, Patent Document 1 below describes matters related to blue light blocking eyeglasses.

### Patent Documents

Patent Document 1: Japanese Laid-Open Patent Application No. 2014-95855

### SUMMARY OF THE INVENTION

### Problems to be Solved by the Invention

In recent years, eyeglasses for protecting the eyes from blue-light, ultraviolet rays, and the like emitted from a display screen of a personal computer or a mobile phone have been sold. Such eyeglasses are designed to prevent the eyes from fatigue caused by light emitted from the display screen (refer to Patent Document 1).

An object of the present invention is to provide a translucent member such as weight loss eyeglasses. More specifically, an object of the present invention is to provide a translucent member such as eyeglasses, a translucent sheet, or a translucent plate that produces an effect of lowering triglycerides, lowering blood glucose, increasing IRS-2, and the like related to metabolism.

### Means for Solving the Problems

The present inventors discovered that, when wearing eyeglasses for protecting the eyes from blue-light, ultraviolet rays, and the like at night, surprisingly a reduction in triglycerides, an increase in IRS-2, and the like occur. The present invention has been made based on these findings.

The translucent member according to the present invention blocks or suppresses transmission of at least light that is received by the eye and has a wavelength of 460 nm. According to this invention, it was presumed that, because the at least light having a wavelength of 460 nm is blocked or the transmission thereof is suppressed, installing or wearing the translucent member particularly at night causes changes, such as a decrease in triglycerides, an increase in IRS-2, or the like in the blood, resulting in weight loss and slimming.

In the translucent member according to the present invention, preferably the at least light having a wavelength of 460 nm is light having a wavelength of 440 to 500 nm, inclusive.

The translucent member according to the present invention is preferably an eyeglass lens. According to this invention, the translucent member can be an eyeglass lens for nighttime use.

In the translucent member according to the present invention, the translucent member is a pair of eyeglasses comprising a lens that blocks or suppresses transmission of at least light having a wavelength of 460 nm, and a rim that blocks or suppresses transmission of at least light having a wavelength of 460 nm. With such eyeglasses used as night eyeglasses worn particularly at night, it was presumed that changes such as a decrease in triglycerides, an increase in IRS-2, or the like in the blood occur, obtaining the above-described effect.

When the translucent member according to the present invention is a pair of eyeglasses, the rim preferably comprises a projecting portion that decreases a gap between the rim and a face of an eyeglass wearer or eliminates the gap by coming into contact with the face. According to this invention, it is possible to keep the light from entering the eye from such a projecting portion.

In the translucent member according to the present invention, the translucent member is a transparent sheet, and blocks or suppresses transmission of at least light having a wavelength of 460 nm. With such a transparent sheet installed to a light source such as indoor lighting or a display and made to function particularly at night, changes such as a decrease in triglycerides, an increase in IRS-2, or the like in the blood occurred.

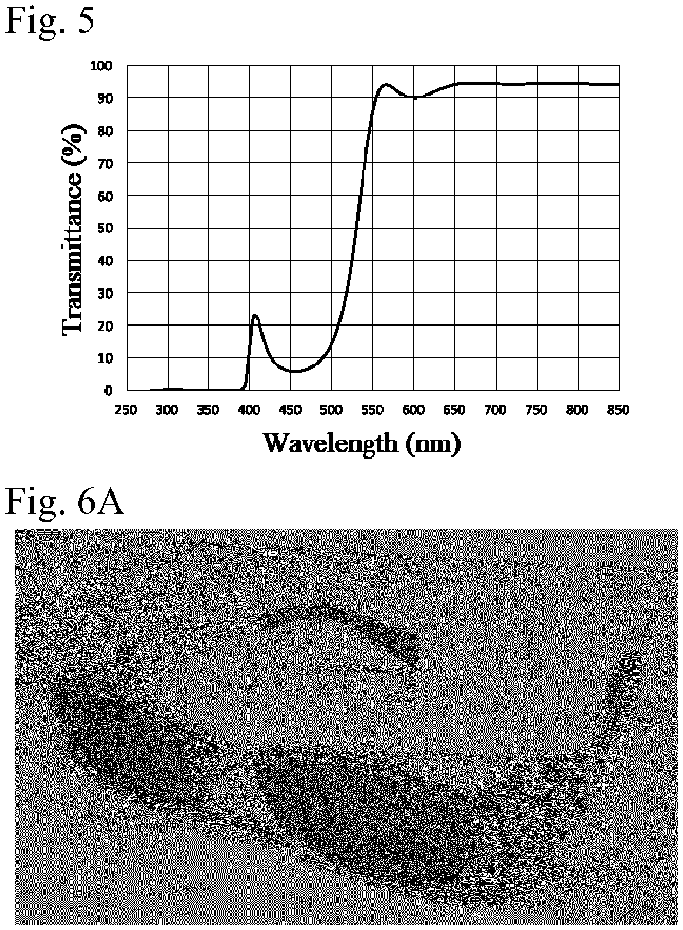

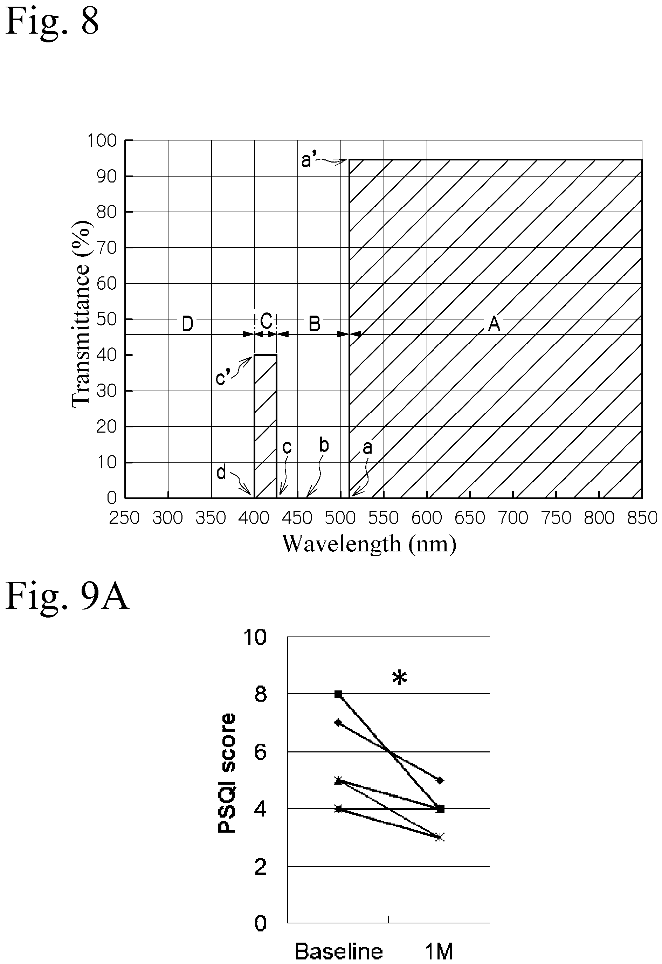

In the translucent member according to the present invention, the wavelength of the light blocked or for which transmission is suppressed may be wavelengths of only 460 nm and the vicinity thereof (for example, wavelengths of 440 to 500 nm), or may be wavelengths of 460 nm and the lower wavelength side of the vicinity thereof. When the translucent member is capable of blocking or suppressing transmission of at least light having a wavelength of 460 nm and the vicinity thereof, the effect is obtained even when only light having a wavelength in the vicinity thereof is blocked or the transmission thereof is suppressed, and even when all light having wavelengths on the lower wavelength side of the vicinity thereof (including a visible light region and an ultraviolet light region) are blocked or the transmission thereof is suppressed. Note that, from the perspective of a color of the translucent member, setting the wavelengths of the light blocked or for which transmission is suppressed to only 460 nm and the vicinity thereof (440 to 500 nm, for example) and partially allowing transmission of visible light in the wavelength region less than or equal to that region, as in Fig. 5 and Fig. 8 described later, makes it possible to lighten the coloring of the translucent member, and is therefore preferred.

### Effect of the Invention

According to the present invention, it is possible to provide a translucent member such as eyeglasses or a translucent sheet that produces the effect of lowering triglycerides, increasing IRS-2, and the like.

### BRIEF DESCRIPTION OF THE DRAWINGS

Fig. 1 is a drawing illustrating eyeglasses as an example of a translucent member according to the present invention.
Fig. 2 is a drawing illustrating a translucent sheet as another example of the translucent member according to the present invention.
Fig. 3 is a drawing illustrating an example of an installation mode of the translucent sheet illustrated in Fig. 2.
Fig. 4 is a graph showing an example of a transmittance curve of the translucent member.
Fig. 5 is a graph showing another example of the transmittance curve of the translucent member.
Fig. 6A is an image showing eyeglasses in which the translucent member shown in Fig. 4 is used as a lens. Fig. 6B is an image showing eyeglasses in which the translucent member shown in Fig. 5 is used as a lens.
Fig. 7 is a graph showing an example of the transmittance curve of UV blocking eyeglasses generally commercially available.
Fig. 8 is a graph showing the transmittance curve effective in obtaining the effect of the present invention.
Figs. 9A to 9C are graphs showing comparison results before and after wearing the eyeglasses shown in Fig. 6A at night for one month.
Figs. 10A and 10B are graphs showing wheel running records of individual mice. Fig. 10A shows the case of a white light pulse (containing blue light components).Fig. 10B shows the case of a blue-cut light pulse (not containing blue light components).
Fig. 11 is a graph showing a phase shift after radiation of the white light pulse and the blue-cut light pulse.
Fig. 12 is a graph showing a per2 expression of hypothalamic suprachiasmatic nucleus (SCN) after radiation of the white light pulse and the blue-cut light pulse.
Fig. 13 is a graph showing blood glucose levels 24 hours and 48 hours after radiation of the white light pulse and the blue-cut light pulse.
Fig. 14 is a graph showing the expression of an insulin receptor substrate (IRS-2) of a liver extracted 48 hours after irradiation of the white light pulse and the blue-cut light pulse.

### Embodiments of the Invention

A translucent member according to the present invention is described below with reference to the drawings. The present invention is not limited to the embodiments and examples below, and various modifications can be made as long as the gist of the present application is included.

### [Translucent Member]

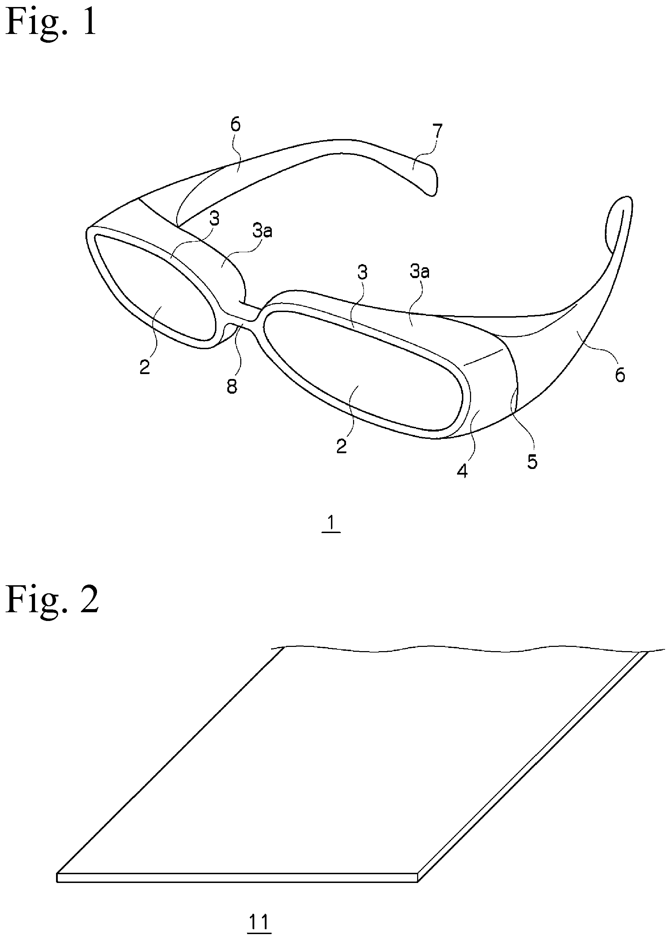

The translucent member according to the present invention blocks or suppresses transmission of at least light that is received by the eye and has a wavelength of 460 nm. Examples of the translucent member include an eyeglass lens 2, eyeglasses 1 (including the lens 2 and a rim 3), a translucent sheet 11, and the like, as illustrated in Fig. 1 and Fig. 2. It was presumed that, with the installing or wearing of the translucent member that blocks or suppresses transmission of at least light that is received by the eye and has a wavelength of 460 nm mainly indoors, particularly at night, changes such as a decrease in triglycerides, an increase in IRS-2, and the like in the blood occur, resulting in weight loss and slimming.

The eyeglasses 1 and the translucent sheet 11 are described below in detail.

### (Eyeglasses)

The eyeglasses 1, as illustrated in Fig. 1, comprise the lens 2 (also referred to as the eyeglass lens 2) that blocks or suppresses transmission of at least light having a wavelength of 460 nm, and the rim 3 that blocks or suppresses transmission of at least light having a wavelength of 460 nm. With such eyeglasses 1 worn particularly at night, changes such as a decrease in triglycerides, an increase in IRS-2, or the like in the blood occurred, as shown in experiment results described later. Note that the translucent member 1 may simply be the eyeglass lens 2, and members such as the rim 3 may not constitute the translucent member 1 according to the present invention, making it possible to obtain at least the effect of the present invention by even the eyeglass lens 2 alone. Note that, in this case, the at least light having a wavelength of 460 nm may be transmitted through the rim 3 and the like or enter the eye from gaps.

An area of the eyeglasses 1 that blocks or suppresses transmission of at least light having the wavelength of 460 nm is preferably an area that can prevent the light (at least light of 460 nm) from entering the eye. Accordingly, examples include the lens 2, the rim 3 that retains the lens 2, a projecting portion 3a that is integrated with and projects from the rim 3, and the like. This projecting portion 3a decreases the gap between the rim 3 and the face of the eyeglass wearer, or eliminates the gap by coming into contact with the face, making it possible to prevent the above-described at least light having a wavelength of 460 nm from entering the eye.

Note that portions constituting the eyeglasses 1 include an armor 4, a hinge 5, a temple 6, a temple tip 7, and a bridge 8. Of these, the armor 4 and the hinge 5 where a gap readily occurs with the face of the eyeglass wearer may each have a shape that protrudes and increases in size so as to decrease the gap or come into contact with the face and eliminate the gap. This makes it possible to prevent the above-described at least light having a wavelength of 460 nm from entering the eye.

The blocking or suppressing of transmission of at least light having a wavelength of 460 nm can be achieved by the special lens 2 and eyeglass components (such as the rim 3 and the projecting portion 3a) capable of blocking light having a wavelength including that wavelength region. The lens material may be glass or plastic. Such a lens 2 and eyeglass components can be achieved by combining known techniques that selectively impart the transmission of specific wavelengths and the blocking of light.

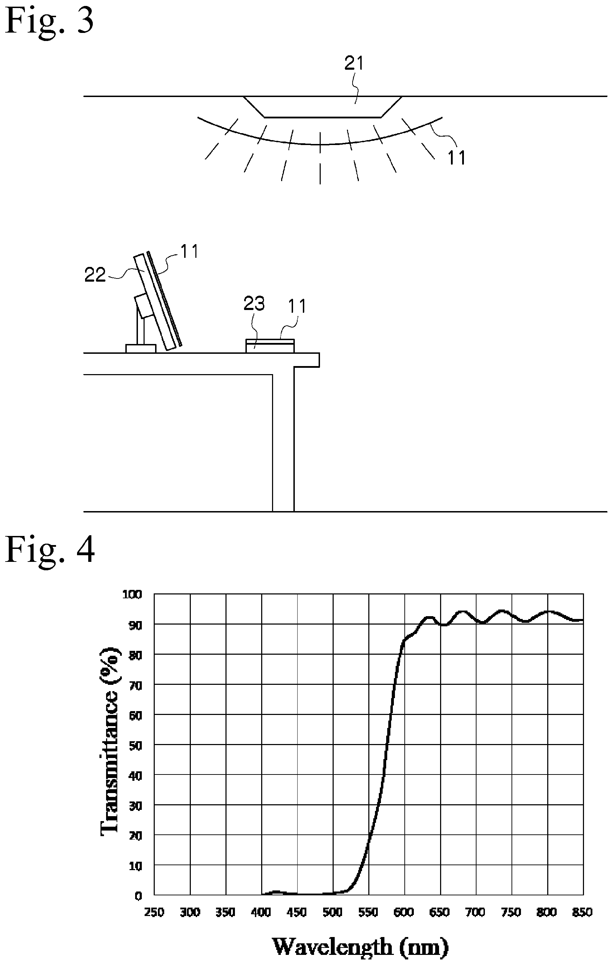

The "at least light having the target wavelength of 460 nm" may be light blocked or for which transmission is suppressed in a wavelength region that includes a wavelength of 460 nm and the vicinity thereof (440 to 500 nm, for example) as shown by the measurement data in Fig. 4. Further, as shown by the measurement data in Fig. 5, light having a wavelength of 460 nm and the vicinity thereof (440 to 500 nm, for example) may be blocked or transmission thereof may be suppressed while simultaneously allowing the transmission of a part of wavelengths less than or equal to that region (400 to 440 nm, for example) to lighten the coloring of the translucent member. When the translucent member is the lens 2 or the like capable of blocking or suppressing transmission of at least light having a wavelength of 460 nm, the effect is obtained even when only light having a wavelength of 440 to 500 nm, for example, is blocked or transmission thereof is suppressed, and even when all light on the lower wavelength side of such wavelengths is blocked or transmission thereof is suppressed.

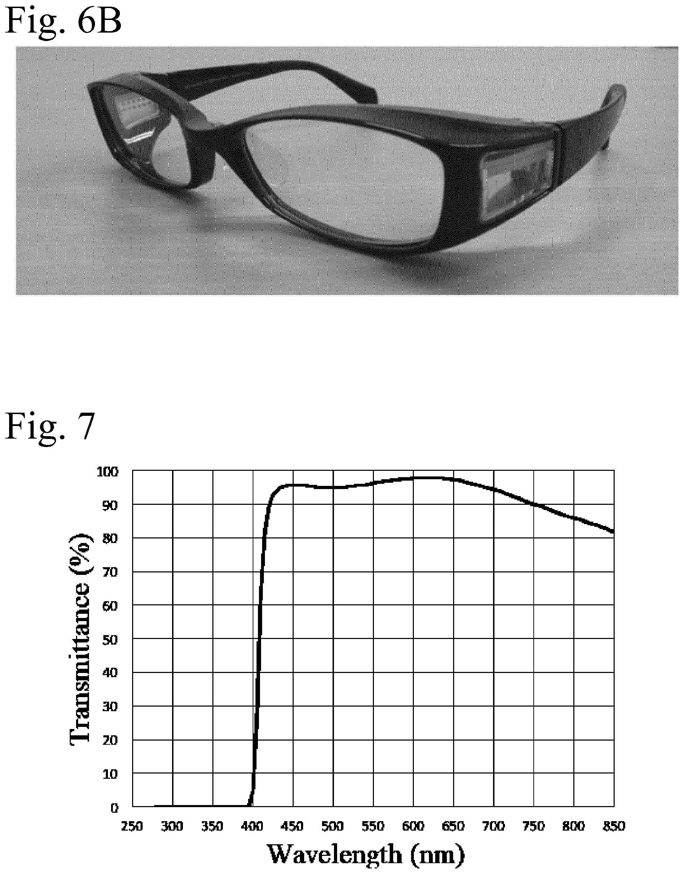

Here, light in the vicinity of 460 nm is light of 440 to 500 nm. This means that the wavelength is a specific range centered around 460 nm, and preferably light is blocked or transmission is suppressed at 440 to 500 nm. However, the wavelength does not need to be strictly 440 to 500 nm and, for example, the lower limit may be 430 or 450 nm and the upper limit may be 510 or 490 nm. Basically, this means that the wavelength range is centered around 460 nm, and is specified so as to not be broad without limits and is not extended to a range that cannot sufficiently achieve the effect of the present invention. While preferably 440 to 500 nm as described above, the wavelength may be about 440 to 520 nm. Note that, with general conventional ultraviolet (UV) blocking eyeglasses such as illustrated in Fig. 7, the transmittance of light suddenly decreases in the vicinity of approximately 400 nm, and such eyeglasses do not obtain the effect of the present invention. Note that, while the transmittance curve shown in Fig. 4 and Fig. 5 can be measured using a general ultraviolet-visible spectrophotometer, measurements in the present invention were conducted using a ultraviolet-visible spectrophotometer (UV-2600) manufactured by Shimadzu Corporation in the same way as the transmittance curve of the lens used in the experiments described later.

The problem of the coloring of the translucent member 1 such as the lens 2, is a matter of preference of the wearer, and is not substantially related to the effect obtained by the present invention. However, when color preferences and the like are taken into consideration to a certain degree, preferably the color is lightened while minimally maintaining the effect of the present invention. For example, with a lens or the like that blocks or suppresses transmission of all light having wavelengths less than or equal to approximately 500 nm, as in the measured values of the transmittance curve shown in Fig. 4, the color becomes dark orange as shown in Fig. 6A, which may be considered not preferred depending on the wearer. On the other hand, with the lens 2 or the like that suppresses the transmission of light of 440 to 500 nm but allows the transmission of a part of light of about 400 to 430 nm as shown in Fig. 5, the color becomes quite light as shown in Fig. 6B, making it possible to obtain a color that does not result in a sense of discomfort. Note that, in the transmittance curve shown in Fig. 5, the transmittance at a peak appearing at about 400 to 430 nm is approximately 20%, which is effective from the viewpoint of coloring reduction compared to the transmittance (90% or greater) on the longer wavelength side of approximately 550 nm.

A transmittance that achieves the effect of the present invention and also takes coloring into consideration will now be described with reference to Fig. 8. In Fig. 8, reference sign A denotes a wavelength region in which light exceeding 500 nm is transmitted. Reference sign a denotes a lower limit wavelength of that transmitting region. Reference sign a' denotes a transmittance of the transmitting region. Reference sign B denotes a wavelength region where light is blocked or transmission is suppressed. Reference sign b denotes a transmittance of that region. Reference sign C denotes a wavelength region where light is transmitted. Reference sign c' denotes the transmittance of that region. Reference sign c denotes a boundary wavelength on the high wavelength side of the region B where light is blocked or transmission is suppressed. Reference sign d denotes a boundary wavelength on the low wavelength side of the region B where light is blocked or transmission is suppressed. Reference sign D denotes a wavelength region on the lower wavelength side of 400 nm where light is blocked or transmission is suppressed.

When the effect of the present invention is achieved and coloring is also taken into consideration,
(1) the wavelength region where light is transmitted in region A preferably has a lower limit wavelength a of that transmitting region that exceeds 500 nm and, for example, may exceed 520 nm. Note that the transmittance a' of the transmitting region A, while not particularly limited, may normally be within a range of about 85 to 99%. With such a range, a field of vision does not become darker than necessary during nighttime use and, since light less than or equal to 500 nm is blocked or transmission thereof is suppressed in region B, it is possible to obtain the effect of the present invention. Note that, while a rectangular shape is given in Fig. 8, normally the shape is a curve, such as shown in Fig. 4 and Fig. 5. Thus, a base of the curve exists in the vicinity exceeding 500 nm, which is the lower limit wavelength a of the transmitting region, as shown in Fig. 4 and Fig. 5. The transmittance at the base may be, for example, about 15% or less such as shown in Fig. 5.
(2) The wavelength region where light is blocked or transmission is suppressed in region B is a substantial region for obtaining the effect of the present invention, and the range thereof is preferably wavelengths of 460 nm and the vicinity thereof. Specifically, the range is preferably 440 to 500 nm, and may be 440 to 520 nm. The transmittance b of the region B where light is blocked or transmission is suppressed is, for example, preferably 0% or greater and less than 10%, as shown in Fig. 4 and Fig. 5. With the blocking or suppressing of transmission of light of this degree, it is possible to achieve the effect of the present invention. Note that, in this region B as well, while a rectangular shape is given in Fig. 8, normally the shape is a curve such as shown in Fig. 4 and Fig 5, as described with region A. Thus, the base of the curve exists in the vicinity of the boundary wavelengths a, c on both sides of the region B where light is blocked or transmission is suppressed, as shown in Fig. 5. The transmittance at the base may be, for example, about 15% or less or about 10% or less, as shown in Fig. 5.
(3) The wavelength region where light is transmitted in region C is significant in the adjustment of the coloring of the translucent member such as the lens. The boundary wavelength c on the high wavelength side of the region B where light is blocked or transmission is suppressed, while preferably 440 nm, may be 430 or 425 nm, for example, because of the relationship with coloring, and the base of the transmittance curve may exist as shown in Fig. 5. Such a base, as described with regions A, B, while a rectangular shape is given in Fig. 8, is normally a curve such as shown in Fig. 4 and Fig. 5. Thus, the base of the curve exists in the vicinity of the boundary wavelengths c, d on both sides of the region C, as shown in Fig. 5. The transmittance at the base may be, for example, about 10% or less, as shown in Fig. 5. Further, the boundary wavelength d on the low wavelength side of the region B where light is blocked or transmission is suppressed, while preferably 400 nm, may be 405 or 395 nm, for example, because of the relationship with coloring, and the base of the transmittance curve may exist as shown in Fig. 5, for example. The transmittance c' of this region C can also be adjusted as desired in relation to coloring. For example, while the value is greater than the transmittance b of region B in Fig. 5, with a peak value of about 25% or less, the transmittance is not limited thereto, and is preferably adjusted as desired in relation to coloring.
(4) In the wavelength region D on the lower wavelength side of 400 nm where light is blocked or transmission is suppressed, light is preferably not transmitted or not transmitted to the extent possible. Thus, it is possible to obtain the effect of the present invention. Note that, in the first place, light of 400 nm or less does not exist or is not likely to exist at night. As a result, when the translucent member such as the eyeglasses is worn or installed at night, preferably the translucent member does not transmit light of 400 nm or less as described above, but may transmit such light.

The coloring adjustment means will now be described in further detail. Coloring, as described above, can impart and improve transmittance on the low wavelength side. When the degree of coloring is set low, preferably there is a transmitting portion of light in the wavelength range of 400 to 440 nm, as shown in Fig. 5, for example. Transmittance in this case is preferably as high as possible since a higher transmittance results in a decrease in coloring. For example, as shown in Fig. 5, when the transmittance of 550 nm or greater exceeds 90%, the maximum transmittance of light of the wavelength range of 400 to 440 nm is 20% or greater. With transmittance adjusted to such a level, the coloring of the translucent member 1 can be decreased as shown in Fig. 6B. Note that the transmittance of the wavelength range of 400 to 440 nm, while preferably adjusted as desired in relation to color, may be 30% or greater or 40% or greater, for example. However, excluding cases where only a specific wavelength range (400 to 440 nm, for example) is a high rectangular shape, when the transmittance is too high, the base of the transmittance curve may raise the transmittance of 460 nm, which is the value for securing the effect of the present invention. Note that the means for selectively adjusting the transmittance curve is not particularly limited, and known technical means such as multilayer film coating performed in the technical fields of glass and eyeglasses can be used. The above also applies to the translucent sheet 11 described later.

### (Translucent sheet)

The translucent sheet 11 is similar to the eyeglasses 1, and is a sheet that blocks or suppresses transmission of at least light having a wavelength of 460 nm, as illustrated in Fig. 2 and Fig. 3. With such a translucent sheet 11 installed and made to function particularly at night, changes such as a decrease in triglycerides, an increase in IRS-2, and the like in the blood occurred.

The various matters related to "at least light of 460 nm" are the same as described for the above-described eyeglasses 1, and thus a description thereof will be omitted.

The translucent sheet 11, as illustrated in Fig. 3, may be installed on a front surface of an indoor lighting 21 or applied to a panel surface of a display 22 or a smartphone 23 so that light does not enter the eye.

As described above, according to the translucent member (eyeglasses 1, translucent sheet 11) of the present invention, it was possible to achieve a reduction in triglycerides, an increase in IRS-2, and the like by the wearing or installation thereof. Further, as confirmed in Experiment 2 and the like described later, it was found that a decrease in blood glucose and an improvement effect in insulin resistance were also obtained.

### Examples

The present invention is described in further detail below using examples.

### [Experiment 1]

Eyeglasses fitted with lenses that substantially prevent light of a wavelength region of 380 to 500 nm from passing therethrough were prepared. Fig. 1 illustrates the shape of the eyeglasses, Fig. 4 shows the transmittance curve of the lens, and Fig. 6A shows the eyeglasses in which the translucent member shown in Fig. 4 was used as the lens.

The experiment target group included six persons (age: 22 to 55 years old, gender: 3 male, 3 female). Each person wore the eyeglasses from three to four hours before bedtime to bedtime, and not during the day. This continued for one month. Note that no other particular restrictions on alcohol consumption, napping, or the like were placed on the target group.

The measured items included (1) a sleep study: Pittsburgh Sleep Quality Index (PSQI), actigraphy, and melatonin in urine, (2) blood test: AST (GOT), ALT (GPT), TG, HDL-cho, LDL-cho, glucose, HbA1c, C peptide, and insulin, and (3) body measurements: height, weight, girth, and blood pressure.

### [Results]

Fig. 9A shows the PSQI scores at the start of the experiment and one month later. The PSQI score indicates the quality of sleep, with a smaller value indicating better sleep. In this experiment, the average PSQI score at the start of the experiment was 5.5, and the score after one month improved to 3.8 (P value: less than 0.05, paired t-test).

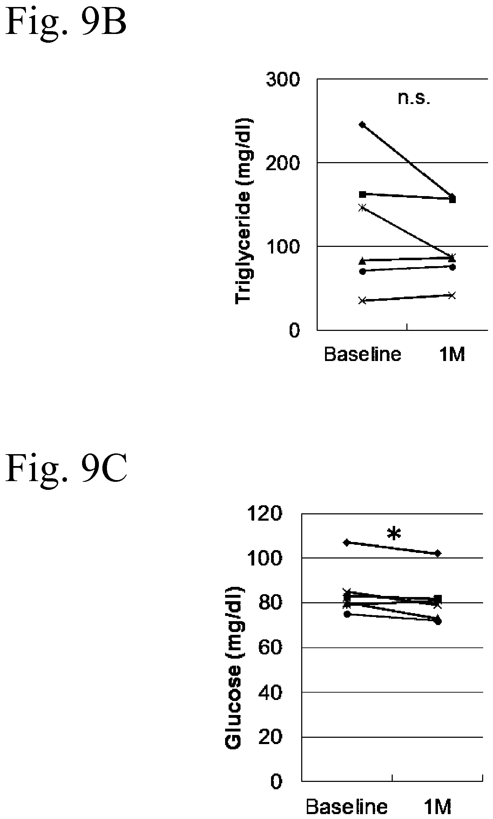

As for fat metabolism, a decrease in triglycerides (Triglyceride) was confirmed as shown in Fig. 9B. Specifically, a numerical improvement of approximately 20% on average was confirmed between the start and the end of the experiment. Particularly, a remarkable decrease was confirmed in two persons, including a decrease from 250 to 160, and a decrease from 150 to 80.

As for glucose metabolism, a decrease in blood glucose level (Glucose) was confirmed as shown in Fig. 9C. Specifically, a numerical improvement of approximately 10% on average was confirmed between the start and the end of the experiment. Particularly, a remarkable decrease was confirmed in four persons, including a decrease from 107 to 101, a decrease from 85 to 78, and a decrease from 80 to 73.

These results showed that improvements in sleep and triglycerides were clearly confirmed in examples in which abnormal values existed before the eyeglasses were worn, and that the quality of sleep, glucose metabolism, and fat metabolism improved. Further, a person weighing 66 kg at the start weighed 63.5 kg at the end, and thus weight loss was also partially confirmed.

### [Experiment 2]

Using 6-week-old male C57BL/6J mice (Japan SLC, Inc.), the effect of light pulse irradiation on circadian rhythm was examined. The mice were raised for one week under 12 hours of light and 12 hours of darkness. Next, the mice were exposed to weak light of 10 lux at Zeitgeber time (ZT) 14 for 30 minutes. White light emitting diode LEDs (Toshiba Materials Co., Ltd.) with or without a blue light blocking shield were used for the light pulse in an optical cage. Subsequently, animals were kept under constant dark conditions. For experiments for evaluating wheel running activity, the mice were independently housed in cages provided with a running wheel. Further, the animals were given a high fat diet (High Fat Diet 32, CLEA Japan, Inc.) and subsequently irradiated with a light pulse. Blood glucose levels were analyzed after 24 hours and after 48 hours of light pulses using a glucometer (Terumo Corporation). Samples of the liver were taken after 48 hours of light pulse.

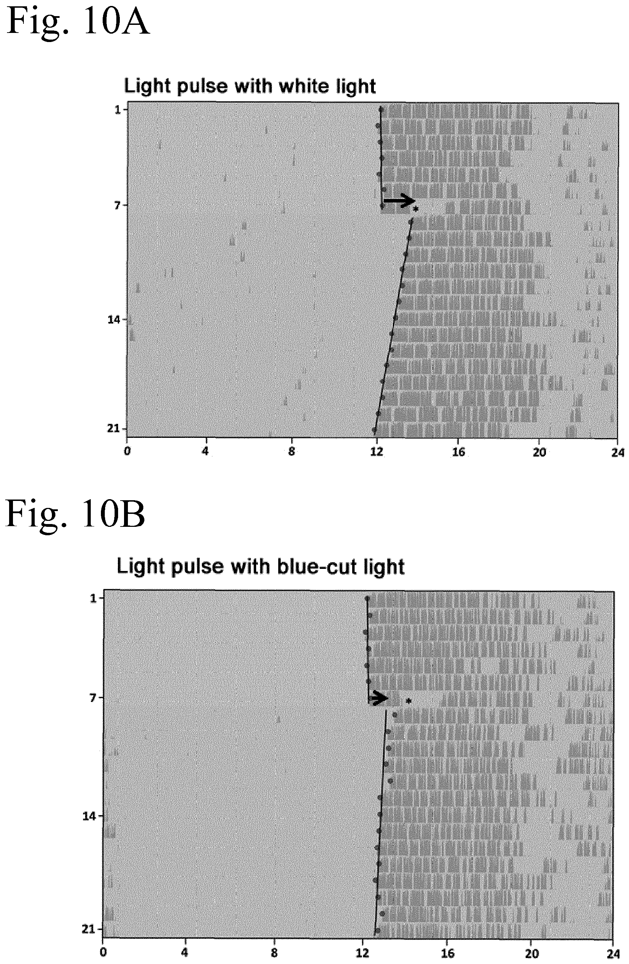

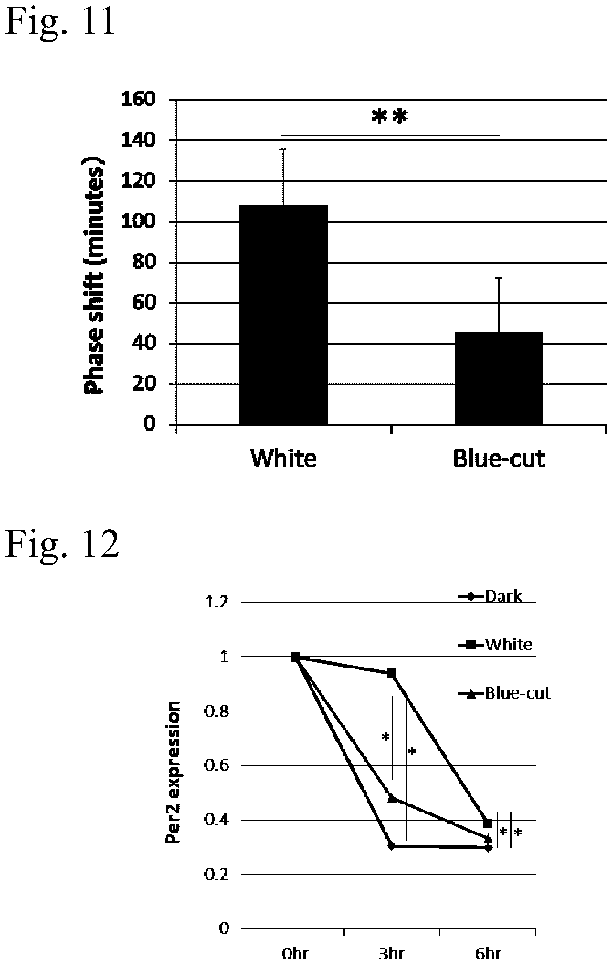

Figs. 10A and 10B each show a wheel running record of individual mice. Fig. 10A shows the record for a white light pulse, and Fig. 10B shows the record for a blue-cut light pulse. In the first seven days, the wheel running activity of the mice was consistently maintained under a light-dark cycle of 12 hours of light followed by 12 hours of dark. However, in a subsequent constant dark state, the wheel running activity start time of the mice advanced by 15 minutes each day when the mice were not exposed to light during the light-dark cycle period (this is called the free-running rhythm of the mouse). When the mice were exposed to light at ZT 14 hours, deviation occurred in the activity start time, as shown in Figs. 10A and 10B (this is referred to as a phase shift). The size of this phase shift was found to differ between the white light in Fig. 10A (which includes a blue light portion) and the light obtained by blocking the blue light in Fig. 10B. Fig. 11 shows the phase shifts found from Figs. 10A and 10B and, from Fig. 11, it was understood that the white light containing the blue light component had a larger phase shift rearward. Further, Fig. 12 shows the phases of expression of per2, which is one type of clock gene, of a hypothalamic suprachiasmatic nucleus (SCN). The white light containing blue light had a significantly large phase compared to a case where the white light was obtained by blocking the blue light and a case where the mice were not exposed to light. These results show that blue light disturbs the circadian rhythm.

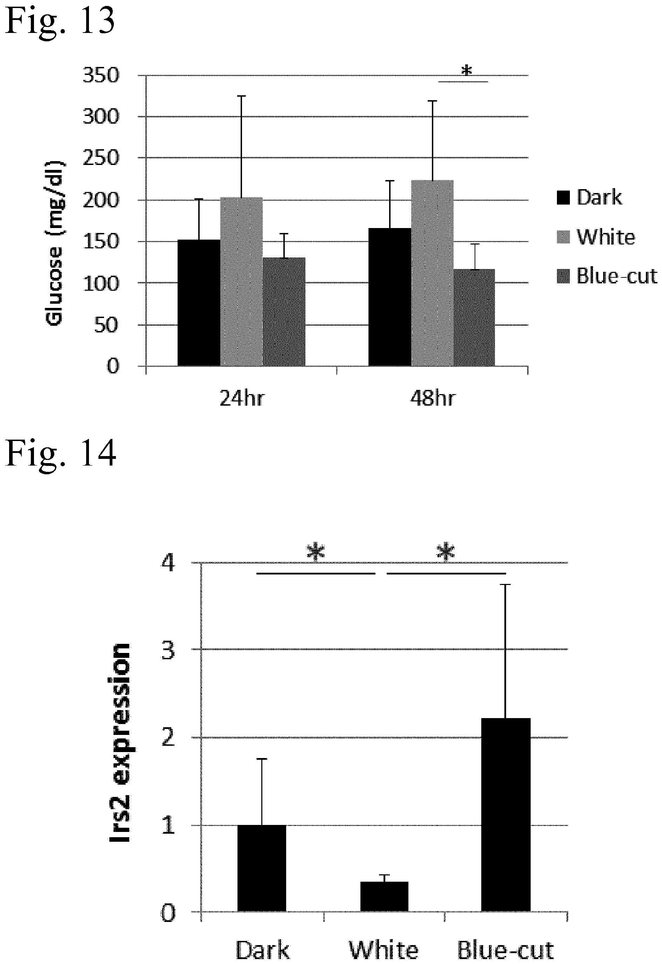

Next, the effect of blue light on the metabolism system of mice was observed. Fig. 13 shows the blood glucose levels at 24 hours and 48 hours after the mice were exposed to the same two types of light pulses as in the previous section after being given a high fat diet. Insulin suppresses glucose production in the liver, and is known to play a role in lowering blood glucose levels. When a high fat diet is given, the fat in the liver inhibits insulin signaling. This increases the production of glucose, and increases the blood glucose level as well. Glucose production in the liver involves IRS-1 and IRS-2, which are insulin receptor substrates (IRS). According to a study by Kubota et al (Kubota N., et al, Cell Metab 8: 49-64, 2008), it was found that IRS-1 acts after feeding, and IRS-2 acts during fasting. In this experiment, while a significant difference was not confirmed with IRS-1, a significant difference (P < 0.05) was confirmed with IRS-2 between when the light contained blue light and when the light did not contain blue light, as shown in Fig. 14. With white light (White) containing blue light, the amount of IRS-2 is low, which leads to hyperglycemia.

### Descriptions of Reference Numerals

- 1: Eyeglasses (Translucent member)
- 2: Lens
- 3: Rim
- 3a: Projecting portion
- 4: Armor
- 5: Hinge
- 6: Temple
- 7: Temple tip
- 8: Bridge
- 11: Translucent sheet (Translucent member)
- 21: Indoor lighting
- 22: Display
- 23: Smartphone

## Claims

1. A translucent member that blocks or suppresses transmission of at least light that is received by an eye and has a wavelength of 460 nm.

2. The translucent member according to claim 1, wherein
the at least light having a wavelength of 460 nm is light having a wavelength of 440 to 500 nm, inclusive.

3. The translucent member according to claim 1 or 2, wherein
the translucent member is an eyeglass lens.

4. The translucent member according to claim 1 or 2, wherein
the translucent member is eyeglasses comprising a lens that blocks or suppresses transmission of at least light having a wavelength of 460 nm, and a rim that blocks or suppresses transmission of at least light having a wavelength of 460 nm.

5. The translucent member according to claim 4, wherein
the rim comprises a projecting portion that decreases a gap between the rim and a face of an eyeglass wearer or eliminates the gap by coming into contact with the face.

6. The translucent member according to claim 1, wherein
the translucent member is a transparent sheet, and blocks or suppresses transmission of at least light having a wavelength of 460 nm.

7. The translucent member according to any one of claims 1 to 6, wherein
the wavelength of the light blocked or for which transmission is suppressed is wavelengths of only 460 nm and the vicinity thereof, or wavelengths of 460 nm and the low wavelength side including the vicinity thereof.
